# EUROPEAN PATENT APPLICATION

(11) **EP 4 371 910 A1**
(43) Date of publication of application: **22.05.2024**
(21) Application number: 23208251.1
(22) Date of filing: 07.11.2023
(51) Int. Cl.: B65G 1/06, B65G 1/137

(54) **METHOD AND A DEVICE FOR STORAGE AND RETRIEVAL OF GROCERY GOODS**

(30) Priority: 07.11.2022 US 202263382613 P; 09.06.2023 US 202363507317 P
(71) Applicant: Cleveron AS, 71020 Viljandi (EE)
(72) Inventor: MUST, Tarmo, 71004 VILJANDI (EE); NUUDI, Harry, 71020 VILJANDI (EE); LÕSSOV, Remi, 71020 VILJANDI (EE); PETTAI, Indrek, 71020 VILJANDI (EE); BINSOL, Rainer, 71020 VILJANDI (EE); ILVES, Jonar, 71020 VILJANDI (EE); LEIB, Mart, 71020 VILJANDI (EE); MÄNDMETS, Gunnar, 71020 VILJANDI (EE); SAETALU, Rein, 71020 VILJANDI (EE); VIIRES, Henri, 71020 VILJANDI (EE); ARUOJA, Tanel, 71020 VILJANDI (EE); PIKKOR, Heiko, 71020 VILJANDI (EE); MASÕT , Roman, 71020 VILJANDI (EE)
(74) Representative: Berggren Oy

(57) **Abstract**

A modular automated storage device and a method to operate the device is disclosed. The device can be built to different sizes and capacities depending on the number and type of modules used. A typical device has a multitude of storage modules (200, 200a, 200b, 250) connected to each other in one or more stories, one or more lift modules (400) each having one or more lifts (401, 451) and each lift module (400) being connected to at least one storage module. Underneath the storage modules there is a conveyor system comprising one or more conveyor modules (300, 320). Each of the lift modules (400) is configured to connect a conveyor module and one or more storage modules. Each lift in the lift modules is configured to move crates (100) between the conveyor modules and the storage modules. The device has at least one console (501) for loading crates and at least one console (525) to receive the crates. The flow of the crates from a loading point, through the conveyor module(s), via the lift module(s) to the storage modules and further to the receiving console is computer-controlled in such a manner that uploading crates can be a continuous process and the receiving the crates can take place simultaneously.

## Description

### Cross references

This application claims priority of U.S. provisional application number 63/507,317 filed on June 9th, 2023 and U.S. provisional application number 63/382,613 filed on November 7, 2022.

### Field of invention

This invention relates to automated devices for storage and retrieval of grocery goods. Especially, the invention relates to an automated modular storage and retrieval device which allows various sizes of storage as well as various speeds of delivery depending on the selection of modules in the device.

### Background of the invention

An example of an early disclosure of a method of delivering groceries purchased over the internet is provided in EP1614375. The method includes filling up internet orders in a warehouse by filling the ordered groceries in totes, moving the totes on a rack into a truck transporting the groceries closer to destination and smaller vehicles then picking up the totes from the truck to deliver the totes to customers' homes.

US20200361711 filed by the applicant, discloses a solution where preordered groceries are stored in totes in an automated grocery terminal and the grocery totes are picked up and loaded by a loader moving vertically on a horizontally moving mast along a corridor between two shelving units. The terminal has two loading areas allowing one person to operate simultaneously at both of the loading areas to speed the process of loading and unloading. A limitation of this solution, however, is that even if two transactions can be allowed simultaneously due to the two loading areas, the mast and loader can serve only one grocery tote at a time, whereby the flow of crates is limited to the moving speed of the mast and loader. Accordingly, even if the system provides clear benefits, it is still not capable of allowing continuous loading and/or unloading of the totes.

The next level of performance of automated storage and retrieval systems are established by large multilevel storage/retrieval systems, for example such as described in WO2023280688. This type of multilevel systems are generally designed for large warehouses. The items to be stored can be moved by unmanned shuttle vehicles moving along rails in the warehouse, such as described in US2012009995.

Thus, the current state of the art is such that there are small parcel terminals with relatively limited storage space suitable to be fitted inside or outside of a retail store (e.g. US20200361711) and on the other hand, there are the large warehouse-scale devices (e.g. WO2023280688).

Accordingly, there is a need for modular storage and retrieval terminals that can be assembled in different sizes and would be versatile in regards with storage space. There is a need for a versatile storage and retrieval terminal system which can be assembled in and dimensioned for an existing space, and which can be easily modified for example when the need of storage capacity is changing over time. Moreover, there is a need of devices and methods for retrieving and storing goods, especially groceries in a manner where a multitude of persons can operate at the device simultaneously and continuously, and where throughput times are optimized and the waiting times are minimized.

### Summary

Accordingly, this invention addresses the shortcomings of the existing systems by providing a versatile automated modular device and method for inserting crates and retrieving goods simultaneously, along with a continuous deposit of crates into the storage space.

The automated modular device can be used in urban areas where space is limited, and retailers need to be closer to their customers. By using a smaller warehouse space and automating the fulfillment process, retailers can reduce their overhead costs while still providing fast and reliable order fulfillment. The automated modular device disclosed here can be incorporated into existing space or on a separate purpose-built structure. The capacity of the automated modular device is adjustable and depends on number and type of modules in the device. The modules are seamlessly attached to each other, which in this context means that the rails inside the storage modules extend from one storage module to the next horizontally attached storage module, that the lift module connects storage modules attached to each other in vertical direction as well as connects the conveyor modules underneath the storage modules to the storage modules, and further that the conveyor lines extend from one conveyor module to another and that the self-moving independent platforms can move from one conveyor module to another.

To facilitate the movement of crates between different areas of the modular device, a conveyor system is integrated beneath a storage area of the modular device. The conveyor system may be an integrated conveyor or it may comprise multitude of self-moving platforms within one or more conveyor modules and the system provides a highly efficient and streamlined way of moving crates through the automated modular device with optimized throughput time. This built-in conveyor system is designed to integrate seamlessly with the layout and design of the automated modular device and further optimizes the use of space by utilizing vertical space by incorporating multilevel shuttle systems into the modular device.

The storage area is formed of multitude of storage modules comprising two shelving rows and being accessibly joined together and the automated modular device has a multitude of automated shuttles equipped with sensors and software to move crates within the storage area inside the modular device. With a multi-shuttle system, where each shuttle-device is configured to move on rails on a single level in the storage area above the conveyor system, the shelving rows have several levels in each storage module and each level has rails mounted to the shelving rows, thus allowing for quick and efficient movement of crates between storage locations (each level of the shelving rows has multitude of storage locations each suitable for storing one crate). Transfer of the crates from one level to another and/or from a conveyor module to a shuttle-device at a level is arranged by incorporation of multiple lifts into the modular device. The computer-controlled lifts can be programmed to move crates between different levels based on the order information and fulfillment requirements. Incorporating multiple lifts into the automated modular device optimizes throughput times and reduces bottlenecks and delays as crates from one order can be moved to different levels by means of the multiple lifts. A shuttle-device suitable for use in the currently claimed automated modular device is disclosed in U.S. 18/218,376 by the applicant, and further details and alternative embodiments that are applicable in the currently claimed automated modular device are disclosed in the provisional patent application U.S. 63/493,151 by the applicant.

The automated modular device and method according to this invention allows continuous insertion of crates onto the conveyor system in a designated area. The conveyor system has means to automatically scan the inserted crate and to move the scanned crate through the modular device, eliminating a need to wait for the automated modular device to process the inserted crate before inserting next crate. The conveyor system acts as a buffer for crates before they are transferred to the storage area as well as a buffer before crates are presented at customer console.

One or more designated consoles for the customers (persons who retrieve the goods loaded in the crates) and one or more designated consoles for the associates (persons who load the crates with ordered goods) allows both loading and retrieving crates at the same time. This helps to ensure that both the customers and the associates have sufficient space and time to perform their respective tasks without getting in each other's way.

It is an object of this invention to provide an automated modular device for storing, and managing grocery orders loaded in crates having an adjustable capacity, the capacity of the device being determined by a number and type of modules in the device, wherein the device comprises:
a multitude of storage modules, configured to be seamlessly attached to each other in horizontal and/or vertical direction;
a multitude of conveyor modules, configured to be seamlessly attached to one another in horizontal direction, and assembled underneath the storage modules;
at least one lift module seamlessly attached to at least one storage module, and comprising at least one lift vertically connecting a conveyor module and at least one storage module;
at least one customer console for retrieval of grocery orders;
at least one associate console for inserting crates loaded with grocery orders, and
at least one shuttle-device; wherein
   each storage module comprises two shelving rows with multitude of storage levels
   each configured to store a multitude of crates, and an aisle in between the shelving rows,
      each level comprising a horizontal rail facing to the aisle and being positioned at a same level as the horizontal rail on the shelving row on opposite side of the aisle to form a pair of shuttle rails to support the shuttle-device and extending through the horizontally attached storage modules and the at least one lift module;
   each conveyor module comprising at least one conveyor line comprising a multitude of conveyor cells or a multitude of self-moving independent platforms, each conveyor cell or independent platform configured to hold a single parcel crate at a time and having at least one sensor to recognize positioning of the single parcel crate;
   the at least one lift module comprising at least one lift configured to move crates in vertical direction between a conveyor cell or self-moving independent platform in a conveyor module located directly underneath the lift module and the at least one storage module to which the lift module is attached (lower storage module/upper storage module);
   the at least one shuttle-device configured to move horizontally on one level along the aisle and being supported by the horizontal rails of two opposite shelving rows, and having telescopic arms configured to extend to two opposite directions, and when the shuttle-device is in a storage module the telescopic arms are configured to reach toward each shelving row on opposite sides of the aisle to pick or deposit a crate, and when the shuttle is in a lift module the telescopic arms are configured to reach to the at least one lift to pick or deposit a crate;
   the at least one customer console and the at least one associate console preferably located at opposite ends of the modular device, wherein the associate console has at least one opening providing access to a loading platform extending from the at least one conveyor module and having connection with at least one conveyor cell configured to move crates to at least one conveyor line or to the at least one self-moving independent platform
in the conveyor module, thus enabling continuous insertion of crates into the device, and at least one controller configured to control the at least one lift, the at least one conveyor line or the independently moving platforms, and the at least one shuttle-device.

According to an aspect of the invention the adjustable capacity of the automated modular device is determined by a storage capacity and capacity to move the crates in the modular device, wherein the storage capacity depends on the number of storage modules and number of shelves in the shelving rows of the storage modules, and the capacity to move the crates in the device depends on the number of conveyor lines or independent moving platforms in the conveyor modules and the number of lifts in the lift modules.

It is an object of this invention to provide device as described above and comprising a multitude of storage modules, one or more conveyor modules, one or more lift modules, and one or more loading platforms, wherein a flow of loaded crates from the one or more loading platforms through the at least one conveyor module to the at least one lift module, and further to one of the multitude of storage modules is optimized by one or more computers, such that loading of the crates can be a continuous process, wherein the optimization comprises adjusting a number of storage modules attached to each other horizontally and/or vertically, adjusting the number of conveyor lines or independently moving platforms in the conveyor modules, and adjusting the number of lift modules and the number of lifts in the lift modules.

According to certain embodiments, the automated modular device has at least two storage modules attached to each other horizontally and having different temperatures and being separated from each other by a panel comprising a multitude of access openings through which the horizontal rail extends,
each access opening located such that the shuttle-device fits through the access opening when moving along the rail between the two horizontally attached storage modules; and
wherein each access opening is openable and closable by a door plate comprising a pair of drive wheels enabling the door plate to move along the rail elements when pushed or pulled by the at least one shuttle, and
wherein the access opening is opened when the shuttle-device moves from a first of the horizontally attached modules to a second of the horizontally attached modules pushing the door plate off the access opening and closed when the at least one shuttle-device upon returning from the second horizontally attached storage module to the first horizontally attached storage module pulls the door plate back to the access opening.

This invention is aimed to provide a computerized method to operate an automated modular device comprising a multitude of storage modules, a multitude of lift modules, a multitude of conveyor modules, a multitude of shuttle-devices, at least one loading platform to load crates with orders into the device, and at least one customer console to retrieve orders; wherein
the loading platform is configured to allow insertion of a crate to a conveyor line or on a self-moving independent platform;
the conveyor line or the self-moving independent platform is caused to transfer the crate to a closest lift module having a free lift, and to position the crate underneath of the free lift;
the free lift is caused to receive the crate and the conveyor line or the self-moving independent platform is thus being freed for a next crate;
the lift carrying the crate is caused to move to a closest level having a free shuttle-device located in the lift module, and the shuttle-device is caused to pull the crate from the lift, thus freeing the lift for a next crate;
the shuttle-device with the crate is caused to move along the rails to a closest free storage position in the level and to push the crate to the free storage position, thus freeing the shuttle-device for a next crate;
wherein simultaneously a free shuttle-device is caused to receive a crate having a requested order from a storage module, thus freeing a storage position for another crate, the shuttle-device with the crate is caused to move into a closest lift module having a free lift and to transfer the crate to the free lift, thus freeing the shuttle-device for another crate, the lift is
caused to move the crate to a conveyor module underneath the lift and thus freeing the lift for another crate, and the crate is caused to be transferred by a conveyor line or an independently moving platform in the conveyor module to the customer console for a customer to pick the order from the crate, and the empty crate is caused to be moved by the conveyor line or the independently moving platform to a crate storage;
wherein a flow of the crates from the conveyor lines or the self-moving independent platforms to the lifts and the storage modules is controlled by one or more controllers such that the flow is a continuous process without bottle necks and insertion of the crates to the loading platform can be continuous without waiting time and simultaneously retrieve orders from the customer console is possible.

According to certain aspects of the invention is provided a method to move storage crates from a conveyor module to a storage location in a storage module of the automated storage device as described above, wherein the method comprises moving the crates by one or more lifts located in one or more lift modules, wherein each lift has means to hold one crate, and
each lift being controlled by at least one controller and upon positioning a crate on a conveyor cell or on a self-moving independent platform underneath the lift, the controller causes the lift to move downward to a position where the crate can be moved to the means to hold one crate, and
the controller further causes the lift to move upward to a predetermined level where an empty shuttle-device is located within the lift-module and in which level there is a free storage location, and the shuttle-device is caused to reach the crate with extendable arms and load the crate onto the shuttle-device which is programmed to move along the rails to the free storage location and transfer the crate to the storage location by the extendable arms.

According to certain aspect of the method, the means to hold one crate comprises a pair of carrying arms connected to a vertically moving carriage, wherein the carrying arms are capable of moving horizontally in relation to each other, and
upon positioning a crate on a conveyor cell or on a self-moving independent platform underneath the lift, the controller causes the lift to move downward to a height where the pair of carrying arms are above the crate, and the controller causes the carrying arms to move further away from each other such that a distance between the carrying arms is larger than the width of the crate;
the controller further causing the lift to move further down to a height where the carrying arms are at a level below the crate, and the carrying arms to move closer to each other, and the controller causes the lift to move upward such that the crate becomes resting on the pair of the carrying arms.

According to certain other aspects of the method, the means to hold one crate is a lift conveyor section, wherein upon positioning a crate on a conveyor cell or on a self-moving independent platform underneath the lift, the controller causes the conveyor cell, which forms a moving conveyor section, to move upward and the lift to move downward such that the lift conveyor section is at same level with the moving conveyor section and the moving conveyor section is caused to move the crate horizontally to the lift conveyor section, and upon a sensor recognizing the crate on the lift conveyor section the controller causes the lift to move upward to the predetermined level.

### BRIEF DESCRIPTION OF THE FIGURES

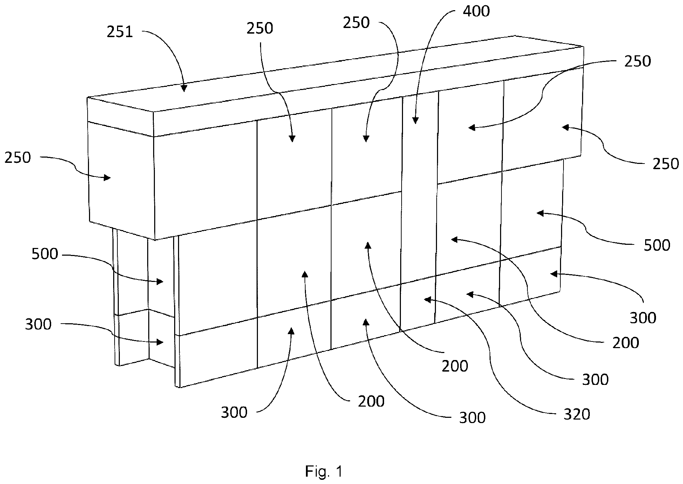

Fig. 1 is a perspective view of an exemplary assembly of an automated modular device for storage and retrieval of goods (called hereafter modular device). The assembly shown here, includes: a conveyor system having multiple conveyor modules (300 and 320), a storage area assembled to have a lower storage story above the conveyor system (i.e. the multiple conveyor modules) having multiple lower storage modules (200) and an upper storage story located above the lower storage story and having multiple upper storage modules (250). On top of the upper storage story there is climate control module (251). In the assembly shown here there are two console modules (500), one at each end of the modular device. The automated modular device shown here, has one lift module (400). It is to be understood that the number of the modules is adjustable and can be changed as is deemed to be appropriate for the space where the device is to be located; for example the automated modular device may have several lift modules and more than two storage stories forming the storage area.

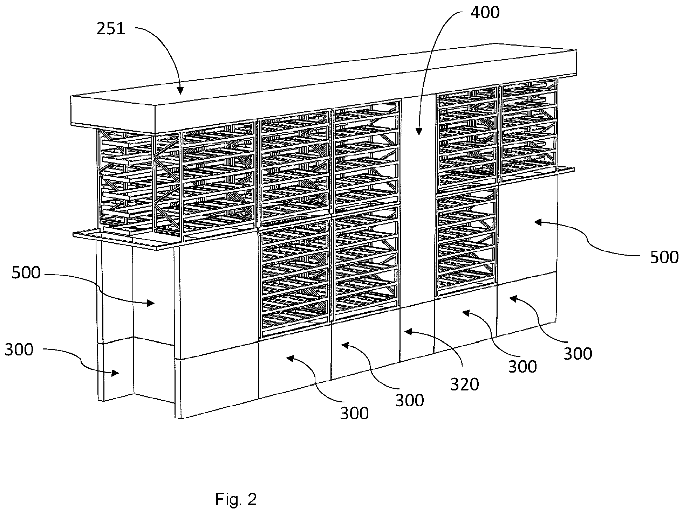

Fig. 2 is a view of the automated modular device of Figure 1 without part of the outer panels such that the structure inside the storage modules is visible.
Fig. 3 shows a storage module (200/250) without the outer panels. The module has two shelving rows (205) and an aisle (202) between them. Each shelving row has multiple platforms (203) and each platform has a horizontal rail (204) assembled onto the side facing the aisle. The rails on opposite sides of the aisle at each level are at same height, such that the rails form a pathway for a shuttle-device to drive along the aisle. At the bottom of the aisle there is a walkway (206) mainly for service purposes.

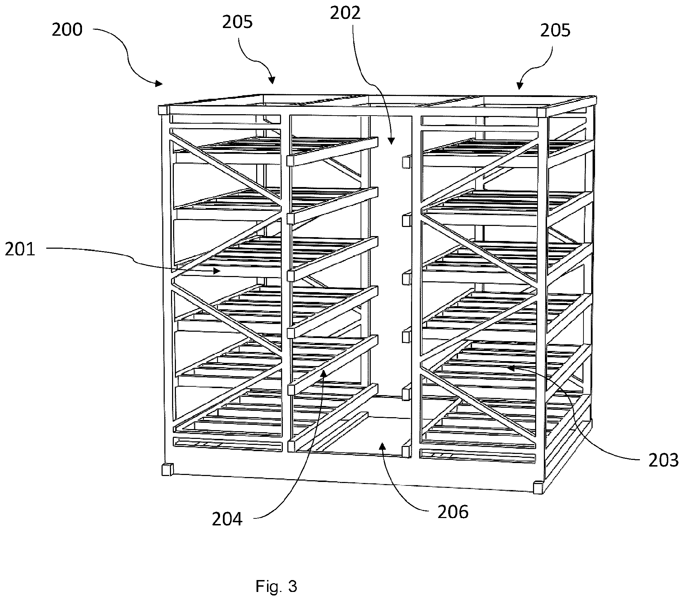

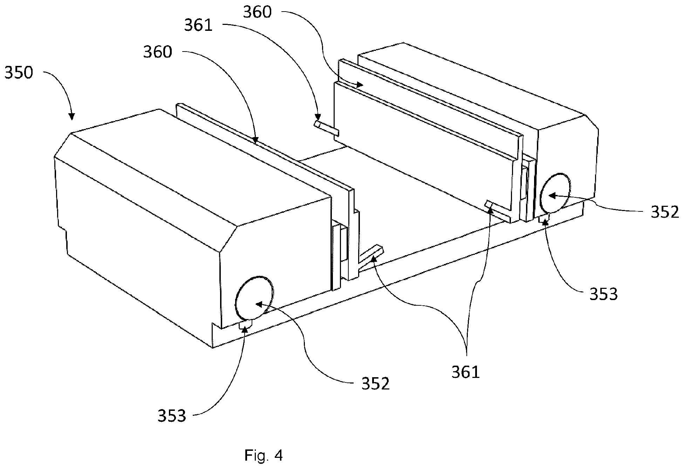

Fig. 4 is an illustration of a shuttle-device (350). The shuttle-device has telescopic arms (360) that are configured to reach to two opposite directions to retrieve a crate. In the shown embodiment the telescopic arms are shown to have rotating levers (361) to hold the crate in place between the arms. The shuttle-device shown here has two drivewheels (352) having a horizontal rotating axis on opposite sides so as to support the shuttle-device on the horizontal rails formed on the shelving rows (see Fig. 3). In addition to the drivewheels the shuttle-device shown here, has also stabilizer wheels (353) having a vertical rotating axis for stabilizing the movement of the shuttle-device.

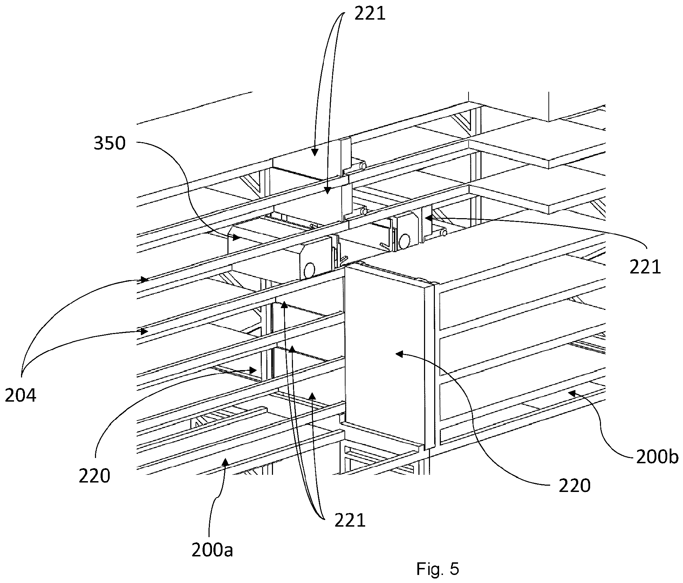

Fig. 5 is a partial inner view of the modular device. The figure shows the shuttle-device (350) moving along the horizontal rails (204). The figure shows an embodiment where movable doors (221) are assembled between the shelving rows of two adjacent storage modules (200a and 200b) to separate different temperature and/or humidity zones. The shuttle-device when moving toward the movable door pushes the door forward and the shuttle-device can enter the zone. When the shuttle-device returns it pulls the movable door back to the original position. The figure also shows a sandwich panel that may be installed in between of different temperature zones.
Fig 6 is an illustration of a conveyor module (300). The module shown here has two conveyor lines (301) running parallel to each other. The figure also shows the conveyor lines divided into a multitude of conveyor cells (302) by conveyor sensors (303).

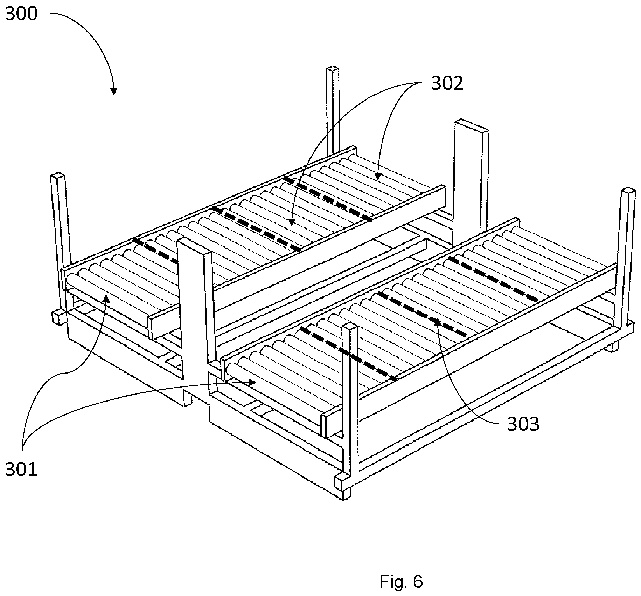

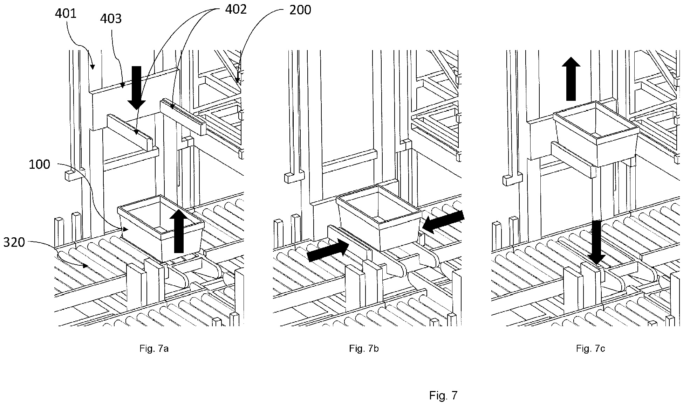

Figs 7a-c illustrates the functioning and structure of a lift module. The lift module is assembled above a conveyor module (320) and abutting a storage module (200). In this figure the conveyor module has two parallel conveyor lines and the lift module has two lifts (401) (only one is visible), each serving one conveyor line. The figure here shows one lift (401), a carriage (403) and crate carrying arms (402). In figure 7a a crate (100) is located on the conveyor line and the arms of the lift are above the crate. A sensor detects when the crate is on the conveyor properly (i.e. completely located on one conveyor cell) and causes the conveyor cells (302 shown in figure 6) under the crate to ascend slightly. Figure 7b shows the situation when the lift has descended to the level of the conveyor line such that the crate fits in between the carrying arms without the carrying arms touching the crate. The carrying arms are now moved closer to each other and consequently the crate rests on top of the carrying arms. In figure 7c, the lift moves upward lifting the crate on top of the carrying arms and the conveyor cells are descended back to original position.

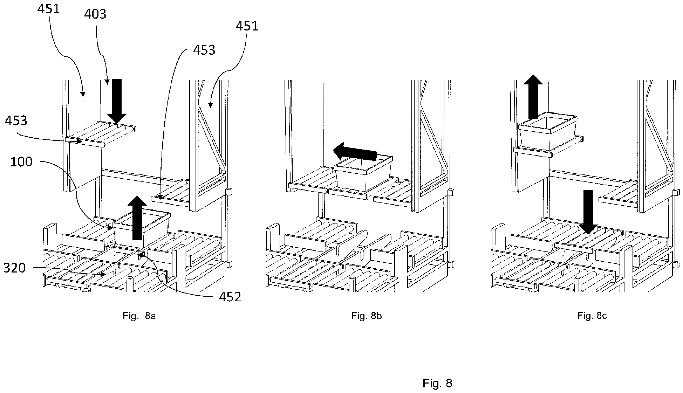

Figs. 8a-c illustrates an alternative structure and functioning of a lift module. The lift module is assembled above a conveyor module (320) having at least one conveyor line. In this embodiment a crate is on the conveyor line properly lined on a conveyor cell being a moving conveyor section (452) (also called transfer section). Once a proper location of the crate is detected by sensors, the moving conveyor section moves upward (Fig. 8a). The lift in this embodiment has a lift conveyor cell (453) and figure 8b shows the moving conveyor section (452) having moved upward to the level of the lift conveyor cell and the crate can be moved horizontally from the moving conveyor to the conveyor cell of the lift. Figure 8c shows the moving conveyor section descending back to the original position and the lift transporting the crate on the lift conveyor cell further up.

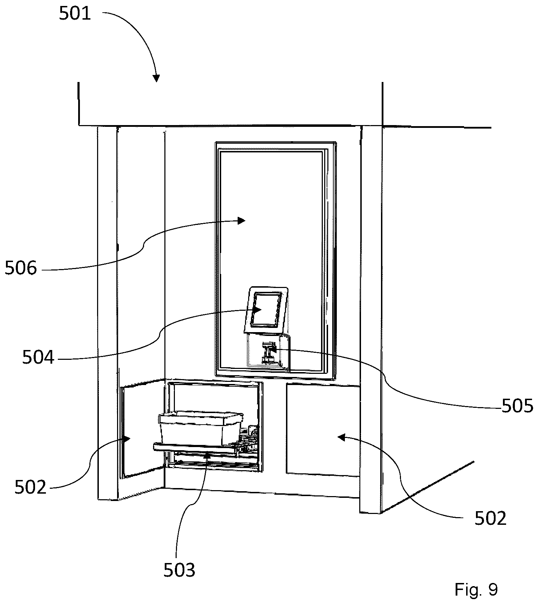

Fig. 9 is an illustration of the associate console module (501) at the end of the modular device. The figure shows a touch screen (504) and a handheld scanner (505). Two insulated outer doors (502) are shown providing access to inner loading platforms (503). The console here is shown to have a maintenance door (506).

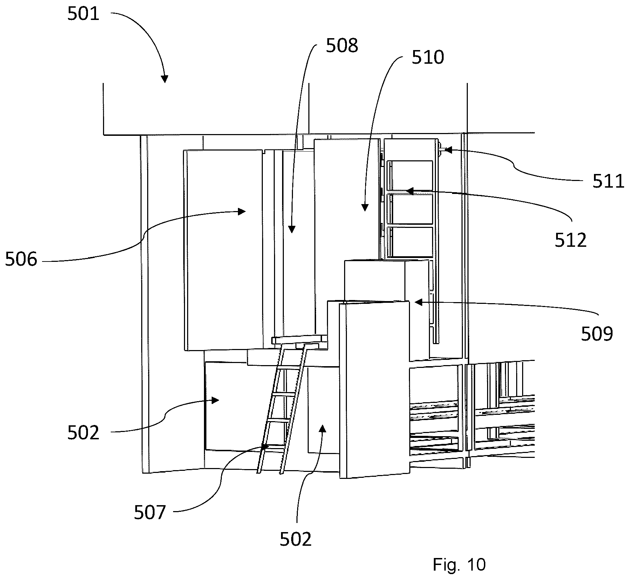

Fig. 10 is another illustration of the associate console (501). This illustration shows a cutout view of the associate console. This figure shows an electrical cabinet (508). Inner safety door (510) to the storage modules and a ladder (512) to storage modules located above the console module are shown. Also the figure shows a rail (511) that carries both the ladder and inner door. Compressed air system (509) is also depicted.

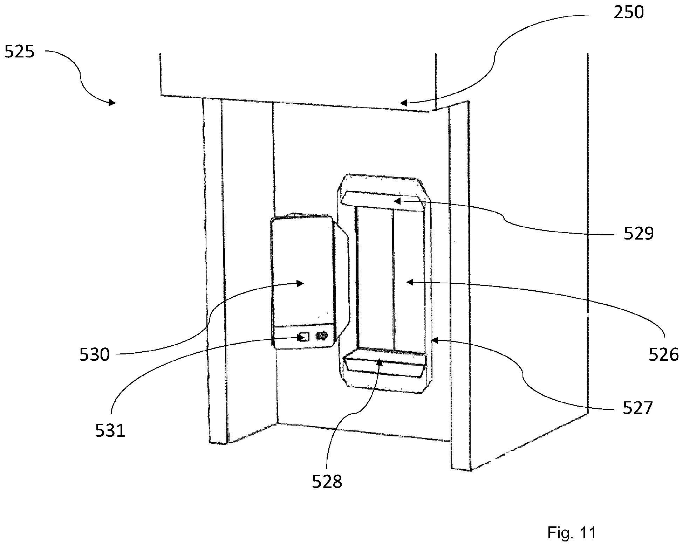

Fig. 11 is an illustration of the customer console (525). The figure shows the touchscreen (530) with a scanner (531). The outer motorized doors (526) providing access to the crate are shown here.
Fig. 12 is an illustration of an embodiment where there are multiple side consoles (540) and trolleys (541).
Fig. 13 shows an embodiment with an outer conveyor line (552) with a crate stacking device (553) and drawers (550) accessible through touchscreens (530) and capable of storing a multitude of empty crates (100).
Fig. 14 shows an embodiment of the automated modular device having two storage levels with multiple storage modules (200/250) and one lift module (400). This embodiment has a conveyor module which does not have a conveyor line but instead a space for self-moving independent platforms (560), where each self-moving independent platform is configured to carry one crate (100) within the conveyor module to enable moving the crates between lift modules and storage modules.

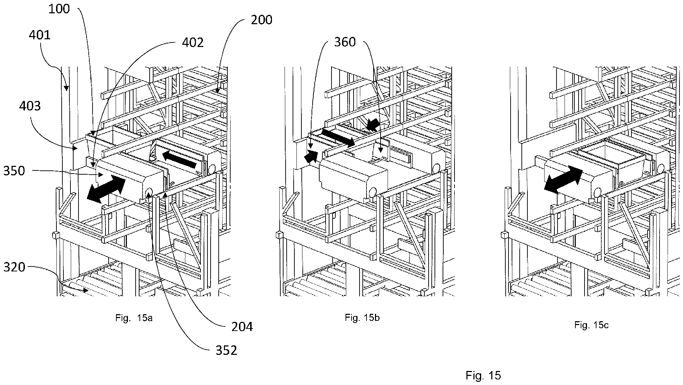

Figs. 15a-c is a further illustration of inner structure of the automated modular device. In figure 15a a storage module (200) is shown and the shuttle-device (350) is illustrated moving within a storage module supported by the horizontal rails (204). The shuttle-device has the drivewheels (352) supporting the shuttle-device on the horizontal rails (204). The rails are attached to the shelving rows in the storage module and in the abutting lift module (400) the rails from the storage module continue seamlessly. This way the shuttle can exit the storage module and enter the lift module. Figure 15a shows a crate (100) on the lift and the shuttle-device in the lift module. In figure 15b, the shuttle-device has extended the telescopic arms (360) to reach to the crate in the lift. Figure 15c shows the extendable arms pulled back and thereby the crate is moved to the shuttle-device after which the shuttle-device can move horizontally along the rails to predetermined location in the storage module.

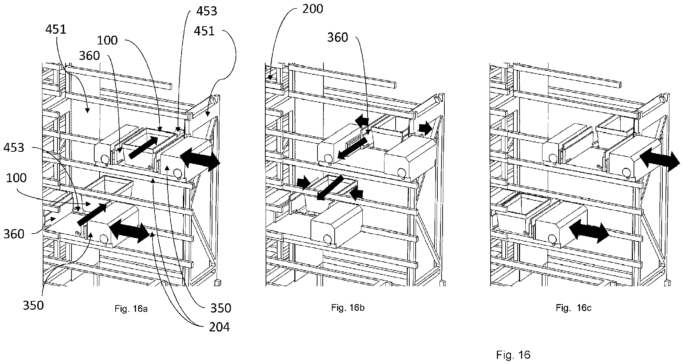

Figures 16 a-c is another view illustrating the operation of the automated modular device. This figure shows the alternative embodiment of the automated modular device (depicted in fig 8) and shows multitude of lifts on the same side of the modular device. Here the automated modular device has at least two levels in the shelving rows and each of the levels have a shuttle-device (350) moving horizontally along the horizontal rails (204). Figure 16a illustrates how both of the shuttle-devices can operate at same time by using two different lifts: the upper shuttle-device has retrieved a crate from a shelving row and the lower shuttle-device is disposing a crate to a shelving row. Figure 16 b illustrates both of the shuttle-devices retrieving a crate from a storage module simultaneously. Fig. 16c shows the upper shuttle-device moving without a crate while the lower shuttle-device moves simultaneously with a crate.
Fig. 17 is a flow chart showing the process of storing items in the automated modular device.
Fig. 18 is s flow chart showing the process of retrieving items from the automated modular device.
Fig. 19 is a flow chart showing the process of storing items with an alternative lift solution (shown in Figure 8.).
Fig. 20 is a flow chart showing the process of storing items with self-moving independent platforms.
Fig. 21 is a flow chart showing the process of retrieving items with self-moving independent platforms.
Fig. 22 is flow chart showing the process of retrieving items with alternative drawers solution.

### DETAILED DESCRIPTION OF THE INVENTION

This disclosure provides a highly efficient and versatile modular device, which is constructed of one or more storage modules **200** /**250**, conveyor modules **300**, lift modules **400**, and console modules **500**. Depending on the location of the modular device, it may be equipped with an outer shell to provide additional protection and insulation.

Each storage module **200**/**250** comprises two opposing shelving rows **205** having a multitude of levels and an aisle in between the rows. Each level in the storage module comprises a platform **203** where crates can be stored, and horizontal rails **204** on which a shuttle-device **350** can move. The shuttle-device is a platform moving on drivewheels **352** along the rails and being capable of carrying one crate **100** at a time and load/unload the crate onto/from the platform **203**. Multiple storage modules can be joined together on vertical or horizontal directions. When the storage modules are joined vertically one on top of another, the automated modular device will have more levels; when the storage modules are joined horizontally such that the aisles of each module match with each other, the automated modular device will have longer aisles and more storage spaces in each level. One or more storage modules can be designated as a different temperature zone, such as a freezer section. This different temperature section formed by one or more storage modules is insulated from the rest of the storage modules. Moreover, movable doors **221** are configured to close off the aisle **202** to further isolate the different temperature zone from abutting storage modules.

The conveyor modules **300** are located underneath the storage modules to make the most efficient use of the available space. According to certain aspects of the invention, each conveyor module comprises two parallel conveyor lines **301**, arranged in such a way that when two conveyor modules are joined together, two parallel continuous conveyor lines are formed. These conveyor lines are used to transport crates around the modular device. The conveyor lines are divided into cells by sensors **303**. Each cell can hold one crate **100** at a time and move the crate independently.

According to another aspect of the invention, the conveyor module may not have conveyor lines but instead a multitude of self-moving independent platforms **560** each configured to carry one crate.

The automated modular device can be assembled such that there are different conveyor modules for different applications. A typical conveyor module only comprises one or preferably two parallel conveyor lines. Another type of conveyor module is a diverter or console conveyor module which is capable of moving crates also between two parallel conveyor lines in one conveyor module or capable of moving crates out to a loading platform or of the modular device. The conveyor module directly underneath the lift module **320** can also transfer the crate from conveyor line to the lift and vice versa as is shown in figures 7a-c and 8 a-c.

The lift module **400** comprises at least one lift. It is to be understood that the number of lifts per a module can vary: Figure 7 shows a lift module with two lifts and figure 8 shows a lift module with 4 lifts. Each lift is a contraption that moves the crates **100** from a conveyor module **320** to storage modules **200/250** in the modular device. One automated modular device may have a multitude of lift modules. Each lift is capable of lifting a crate by lowering its crate carrying arms **402** around and under the crate **100**. While the crate **100** rests on the crate carrying arms **402**, the lift moves up to the storage module having a vacant shuttle-device **350** that pulls the crate from the lift's carrying arms onto the shuttle-device itself, as shown for example on figure 7.

Console modules of this automated modular device are designated areas for the customer or associate to interact with the modular device. An associate, also known as operator, can insert crates into the automated modular device at one console, and a customer can receive their goods from another console simultaneously. Consoles may be located at the ends of the automated modular device and/or on the sides. Additionally, consoles may have dedicated users, such as associates or customers only, as they may have constructional differences associated with them.

The automated modular device and its various functions are controlled by a control system having one or more controllers, such as computing devices capable of storing data and refreshing the stored data. The control system determines and coordinates movements of the shuttle-devices, the conveyor lines, the self-moving independent platforms and well as the lifts. The control system may for example include one or more computer systems, data storage devices, wired and/or wireless networks, software (e.g., programs, modules, drivers, etc.), user interfaces, scanners, and communication modules.

The present invention thus provides a highly efficient and versatile modular device, which can accommodate a wide range of storage requirements. The integration of the storage modules, conveyor modules, lift modules, and console modules provides a comprehensive solution, which maximizes storage capacity and enhances customer experience.

### Storage module

The storage module **200/250** comprises two shelving rows **205** with an aisle **202** in between, designed to optimize the storage and accessibility of crates. The shelving rows have multiple storage levels **201**, each configured to store crates and each made of a low-friction material to allow easy sliding of the crates.

The distance between two storage levels **201** in a shelving row is determined by the height of the crates, resulting in more levels in the shelving row for lower crate heights. However, the levels **201** on opposite sides of aisle are on same height. To ensure flexibility, the storage modules **200/250** are constructed using optimized components that allow for the easy assembly of different crate heights. These modules can be connected in horizontal or in vertical manner to create different shelving structures, with walkways **206** in the aisles to provide convenient access for service or maintenance.

Each storage level **201** is equipped with horizontal rails **204** on both sides of the aisle, together forming a shuttle rail to support shuttle-devices **350** moving along the aisle **202**. The horizontal rails **204** are designed to accommodate drivewheels **352** on top and stabilizer wheels **353** on the side, with one rail in each pair featuring encoder holes to help the shuttle position itself accurately. This configuration ensures efficient and smooth movement of crates within the storage modules.

The storage modules are configured to form various temperature zones, wherein an entire storage module or several abutting storage modules can have a uniform temperature or one or more storage modules may have multiple temperature zones. To provide separation between the temperature zones, sandwich panels **220** are integrated in between the storage modules of different temperatures, which allows for efficient insulation of each zone.

The aisle between the shelves creates an opening in the sandwich panel, which is covered by movable doors **221** to enable the shuttle-device **350** to enter and exit through the movable door to different temperature zone. The movable doors are designed to cover at least the height between two levels, ensuring a consistent temperature within each zone. The movable doors have rollers at their bottom and the rollers are supported by the same horizontal rails **204** that the shuttle-devices **350** ride on. Similarly to the shuttles, the door drive wheels are accommodated on top and stabilizer wheels on the side of the rail. The shuttle-devices **350** can move the doors by carefully pushing the movable doors **221** from their closed position. Upon returning, the shuttle-device will pull the door back to the closed position with the help of magnets. This door design eliminates any need for motorized doors between the different temperature zones. The panels and doors are constructed using materials that provide high-quality insulation and protect against temperature fluctuations.

The automated modular device may be constructed to have multiple stories of storage modules. The uppermost storage modules **250** may be equipped with integrated climate control modules **251** that circulate climate-controlled air within the modular device. In one embodiment of the invention, the automated modular device is located within a climate-controlled environment, which eliminates the need for insulation panels on the outside of the modular device. In this configuration, the temperature within the automated modular device is controlled by the location climate control. Further, the storage modules can be insulated selectively to create one or more different temperature zones, as required. The invention thus provides a highly versatile storage solution, capable of accommodating a wide range of temperature control requirements. The integration of the climate control units and the selective insulation of the storage modules enable precise and efficient temperature control, which is particularly advantageous for storing perishable goods.

### Associate console

The automated modular device features an associate console **501** located at one end of the modular device, which is intended for use by trained personnel to load or unload crates to and from the modular device. At the walls of the automated modular device in the associate console there are multitude of openings. In case the automated modular device is covered with panels there are insulated outer doors **502** which cover the inner loading platforms **503**. The inner loading platforms are folded up when the associate is not using the modular device. Loading platforms and outer doors are locked in a closed position with electronic locks.

The associate console is equipped with a touchscreen **504** that allows associates to access the functions of the automated modular device and identify themselves. On that touchscreen **504** the associate can open the insulated outer doors **502** covering inner loading platforms **503** and fold them down.

The inner loading platforms **503** are extensions of the conveyor lines **301** in the conveyor module or they have connection to the self-moving independent platforms **560** in the conveyor module. The associate can load the crate onto the loading platform and push the crate into the modular device. The automated modular device may have a multitude of loading platforms and one can be used to simultaneously receive empty crates from the automated modular device while another one is used to load full crates into the modular device. Once a crate is placed on the inner loading platform **503** and pushed towards the modular device, a sensor is activated, and the conveyor line or a self-moving independent platform is automatically engaged to pull the crate into the automated modular device for scanning. If the scanning fails, the crate is pushed back out, and an associate is notified through the touchscreen **504** and the associate will be able to scan the crate using a handheld scanner **505** located near the touchscreen.

Additionally, the associate console comprises a maintenance door **506** which can be used to gain access to the inside of the modular device. The maintenance door is electronically locked and can be unlocked on the touchscreen **504**. Only trained personnel can have access to enter the modular device. There is a small ladder **507** that can be taken from the automated modular device and placed in front of the maintenance door **506** to gain easy access into the modular device. Inside the associate console the technician can have access to the electrical cabinet **508** and compressed air system **509**. The automated modular device does not require to be taken offline during this operation due to the rest of the automated modular device being isolated from the console area. There is a see-through inner safety door **510** in the associate console which is electronically locked isolating the console area and rest of the modular device. The door rides on a rail system **511** and can be pushed aside to gain access to the modular device, also on the same rail rides a ladder **512** which can be pulled and placed in the center of the automated modular device to provide access to the top modules of the modular device.

### Customer console at the end of the modular device

The automated modular device may feature a customer console **525** at one end of the modular device. The customer console is designed to be used by customers who come to receive their orders. The console comprises outer doors **526** and a frame **527** around the doors. The frame houses safety light curtains on the sides and provides a wear-resistant surface **528** for handling goods at the bottom. At the top of the frame, a light **529** is provided to ensure proper illumination during operation.

A touchscreen **530** is mounted on the side of the customer console frame to allow customers to access the modular device's functions, such as receiving their goods and identifying themselves. A scanner **531** is mounted under the touchscreen and can be used by the customer to identify themselves by scanning their barcode/QR code or other type of identification code received with the order.

Once the customer has identified themselves, a crate containing the ordered goods is brought to the customer console and secured in place. The outer doors **526** of the console are then opened, and the customer can remove their goods from the crate. However, the crate is fixed in place during this procedure and cannot be removed by the customer. After confirming on the touchscreen that they have taken their goods, the outer doors close, and the next crate with the customer's goods is brought to the console, while the empty crate is unlocked from the console and moved away. This procedure repeats until the customer has no more crates left containing their order.

In the case of a multi-story modular device, an upper storage module **250** may extend directly on top of the customer and/or associate console at the ends of the modular device, creating an awning that protects the user from the elements during interaction with the automated modular device (as shown in Figure 1).

### Console at the side of the automated modular device solution 1

In certain embodiments, a specialized console may be positioned at the side of the automated modular device to cater specifically to the courier, customer, or other parties. The console may even be intended for use with autonomous vehicles. Alternatively, multiple user groups may utilize a common console.

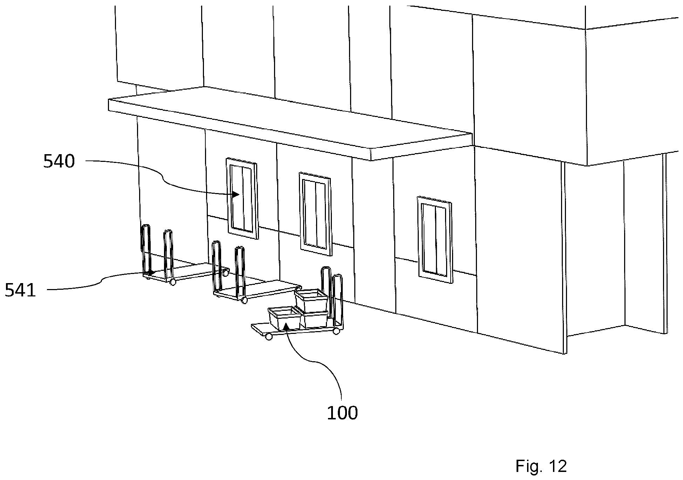

Some embodiments as shown in **Fig. 12** include side console **540** that may incorporate automatic doors on the side of the modular device, creating a console area for the customer or courier. The crates **100** can be manually removed from the console and stacked onto trolleys **541** nested adjacent to the console, which can then be utilized like shopping trolleys. Later, the trolleys can be returned, or a shop assistant can store the empty crates in a designated area.

### Console at the side of the automated modular device solution 2

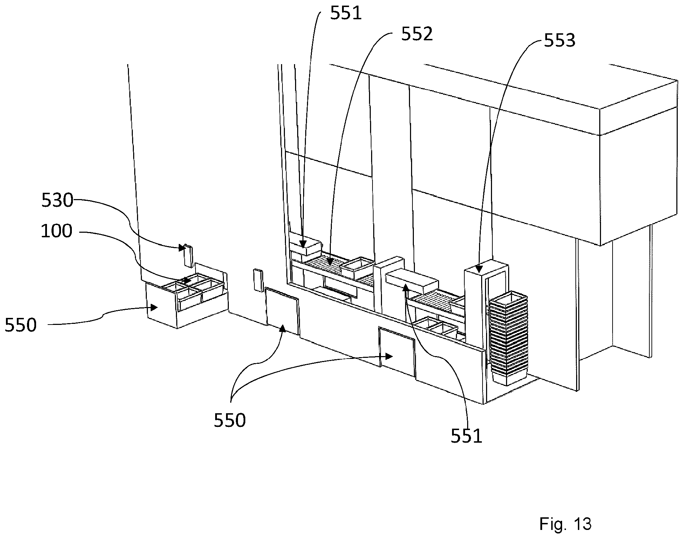

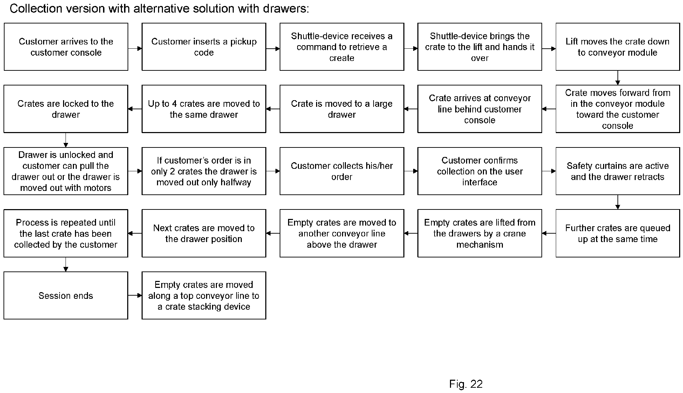

Yet another embodiment **Fig.13** of the side console features drawers **550** that serve as a platform for the crates **100** onto which a conveyor line of the automated modular device can push crates. The crates are pushed from the conveyor line **301** inside of the automated modular device to the drawer's platform that is outside the modular device, freeing up the conveyor line for other crates. The drawers may serve as storage space for empty crates and may hold multiple rows of crates. **Figure 22** shows a flow chart in an alternative version where crates with customer orders are pushed to the drawers from which the customers can pick up their orders. The empty crates are then lifted from the drawer's platform by means of a crane-like mechanism **551** to an outer conveyor line **552** transporting empty crates to a designated empty crate stacking device **553**. A shop assistant can later retrieve the empty crates from this location.

### Lift module

The automated modular device features one or more lift modules each comprising one or more lifts **401**. The lifts are used to transport crates between conveyor modules **300** and storage modules **200/250**. In one embodiment, the automated modular device includes at least one lift for each conveyor line, with each lift having crate carrying arms **402** mounted to a carriage **403** that can carry a crate **100**. The automated modular device is designed such that when a crate **100** correctly positioned on the conveyor line **301** or on a self-moving independent platform is positioned directly underneath the lift, the crate carrying arms **402** can grab the crate. A conveyor module located beneath the lift centers the crate to its correct position and raises it off the conveyor line so that the lift arms can be lowered around the crate without touching it. The lift arms can then move past the crate and move toward each other to decrease the distance between them, thereby positioning them under the crate. The lift arms can then move up towards the storage module and raise the crate with the arms. Once the lift has reached the desired level of the storage module, it stops, and a shuttle-device **350** can pull the crate off the lift arms. The lift may then go to another storage level to receive a new crate from another shuttle-device or go back down to take another crate from the conveyor module. Figure 7a-c illustrates this embodiment.

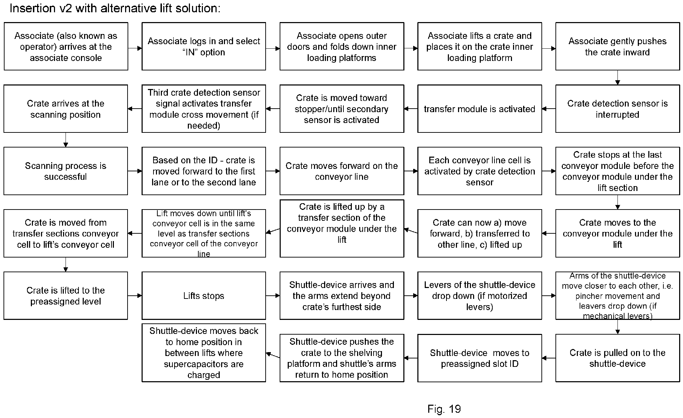

In another embodiment Fig 8 a-c, the lifts **451** do not have arms to be lowered to the conveyor system. Instead, the conveyor line located beneath the lift module **320** raises the crate **100** up by raising a moving conveyor section **452** with the crate **100**. As the crate clears the conveyor module and reaches the storage module **200**, at least one lift **451** on the side of the raised conveyor line cell is waiting with its own lift conveyor cell **453**. The two conveyor sections (the raised conveyor line and the lift conveyor) are parallel and at the same level, allowing the crate to be moved horizontally from the raised-up conveyor line section to the lift's conveyor section by activating both conveyor sections simultaneously **Fig 8b**. After the crate has reached the lift conveyor section, the lift will start to move up to the storage modules where a shuttle-device **350** can pull the crate from the lift. Simultaneously, the conveyor section that brought the crate up can move down to receive another crate from the conveyor line or it can receive another crate from another lift on the other side of the raised-up conveyor section while it is still up to bring the second crate down to the conveyor section. **Figure 19** depicts a flowchart for steps to load crates into an automated modular storage device with an alternative lift solution as shown in figure 8 a-c.

### Conveyor module

### Conveyor solution 1

The conveyor system is located below the storage modules. The conveyor system is composed of one or more conveyor modules **300** attachable to each other and being configured to be conveniently assembled at the installation site. Each conveyor module has at least one and preferably two parallel conveyor lines **301**, which are divided into numerous conveyor cells with sensors. These cells can operate independently of one another, providing a highly adaptable and responsive crate transportation system. Each cell is configured to accommodate a single crate at a time, further increasing the flexibility of the system. The conveyor modules can be placed side by side to form an extended, continuous conveyor line.

The conveyor system may comprise different types of conveyor modules. A typical conveyor module only contains two conveyor lines, whereas a diverter or console conveyor module can move crates between conveyor lines on a single module or off a module to a side console **540**, crate processing device, or another conveyor line outside the modular device. Furthermore, the conveyor module located beneath a lift module **320** can transfer crates between conveyor lines and also transport the crates to the lift.

In some embodiments, the conveyor system may include conveyor lines outside or near the automated modular device for transporting empty crates to an empty crate stacking contraption to prevent empty crates from returning to the modular device. Additionally, an external conveyor may be employed to transport crates to side consoles adjacent to the modular device.

### Conveyor solution 2

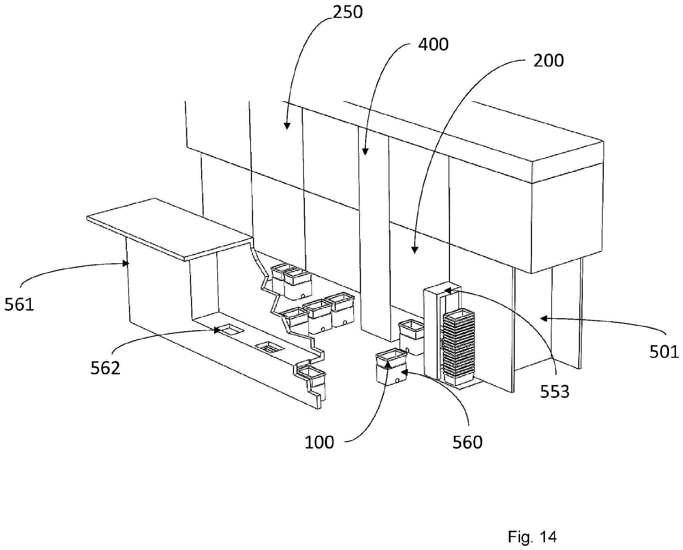

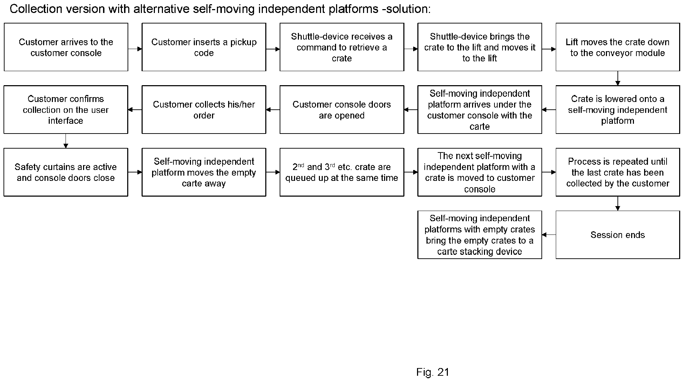

An alternative conveyor system **Fig. 14** comprises a plurality of computer controlled self-moving independent platforms **560** that are capable of autonomously transporting crates **100**. The crates are affixed to the platforms while being transported. The platforms follow designated paths (alternative to the conveyor lines) within conveyor module(s) that are situated beneath the storage modules. Instead of conveyor lines, the self-moving independent platforms can take the crate from the associate console **501** and transport it to a lift module **400** to be taken to storage modules **200/250** by a lift **401/451.** In some embodiments, remote console(s) **561** may be located either adjacent to or remote from the modular device. In such cases, the self-moving platforms may be employed to carry the crates to an auxiliary console **562**. The auxiliary console may be constructed such that the self-moving independent platform can drive underneath it, with the crate attached to it, while sliding doors of the console atop the crate expose its contents to the customer. The customer can then remove their order from the crate that is still affixed to the self-moving independent platform beneath the console. Empty crates are then transported to a crate stacking device **553** for storage. **Figure 21** depicts a flow chart for collection of a grocery order from an automated modular storage device comprising self-moving independent platforms for moving the crates.

### Shuttle-device

A shuttle-device **350** is a moving platform that transports crates **100** in the storage modules **200/250** and/or the lift modules. The shuttle-device comprises a platform that has preferably four drivewheels **352**. The platform is designed to move along an aisle **202** between shelving rows **205**. The shelving rows have horizontal rails **204** parallel to the aisle on each horizontal level **201** and the rails support the drivewheels **352** of the shuttle-device. The shuttle-device further comprises at least two stabilizer wheels **353** on both sides of the platform to maintain a constant distance from the rails.

The shuttle-device is configured to retrieve and deposit crates from and to the lift module and the storage module, respectively. The platform of the shuttle-device is equipped with two telescopic arms **360** that are positioned in the middle of the platform and extend perpendicularly to the platform's direction of movement. These arms are capable of extending in both directions and can extend beyond the width of the platform.

To retrieve a crate from a storage module or a lift module, the extending arms of the shuttle-device move in synchrony past the sides of the crate, and the distance between the arms decreases. This motion causes the rotating levers **361** at the distal ends of the arms to rotate behind the crate, after which the arms can contract back to the platform, pulling the crate along. Conversely, to deposit a crate onto a storage module or to a lift, the shuttle extends its arms pushing the crate with levers and increasing the distance between the arms, when the crate has reached its position the levers are rotated back into the upright position which allows the arms to be retracted without the crate.

In an alternative embodiment the shuttle arms have no rotating levers at the end of the extending arms but fixed edges that can pull the crate. These fixed edges move with the arms. When the arms move closer to each other to grab the crate the fixed edges move behind the crate.

One shuttle-device is configured to move along the rails in one level of the shelving row and to move from a storage module to another at the same level. Furthermore, one shuttle-device may enter multiple lift modules and serve multiple lifts at one level; i.e. the shuttle-device is not configured to move from one level to another.

According to one embodiment multiple modular devices are positioned side by side and a rail system is constructed between the modular devices. Such rail system would require the shuttle-devices to have another set of wheels that would allow them to move perpendicularly to the initial rail system in order to move between the multiple modular devices.

### Description of steps to load and unload crates to and from the automated modular storage device

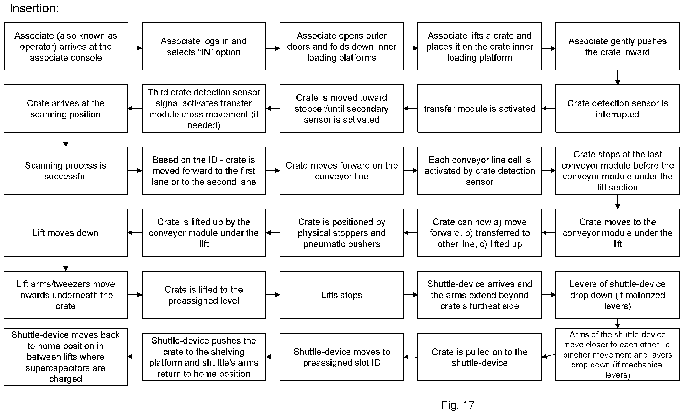

Description of method to load crates into the automated modular storage device is illustrated in detail in Figure 17. In essence, a person operating the modular device, such as a courier or sales associate logs in to automated modular device at associate console and opens the outer door and folds down the inner loading platform, lifts a crate with a grocery order onto the platform and pushes the crate into the modular device. Pushing the crate into the automated modular device causes a computer-controlled transfer module to become activated and the crate will be moved to a scanning position and become scanned. The information is saved in the computerized system and based on the scanned information the computerized system determines suitable conveyor line onto which the crate will be moved. Alternatively, the crate is moved on a self-moving independent platform. The conveyor line (or the self-moving independent platform) is caused to move such that the crate stops underneath a lift. The crate will be moved to the lift and the lift is caused to move to a level determined by the saved scanned information. A shuttle-device moving along the rails of the level where the lift brings the crate is caused to enter the lift module and by means of extendable arms move the crate onto the shuttle-device. After this the shuttle-device is caused to move to preassigned storage slot and move the crate onto the slot.

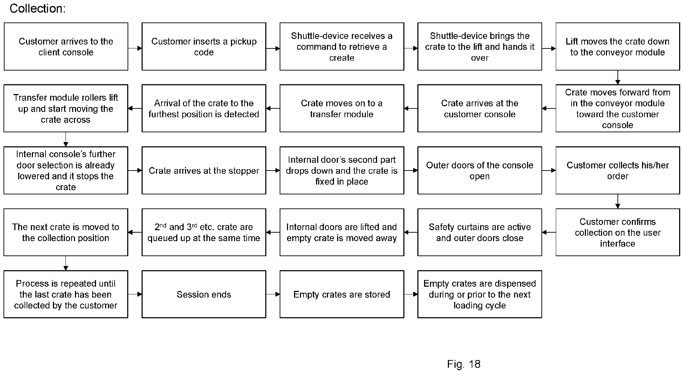

Figure 18 depicts the steps for a customer to pick up the grocery order from the automated modular storage device. Upon receiving a pickup code the customer enters the code at the customer console.

The computerized system identifies the crate in the automated modular storage device and a shuttle-device that is on the level where the crate is stored is caused to retrieve the crate and bring the crate to a lift which moves the crate to conveyor module where the crate is moved toward the customer console. Upon arrival to the customer console outer doors of the console are caused to be opened and the customer can pick up the order and the empty crate is moved to collection position and moved to storing. Alternatively, the crate is moved to a designated drawer from which the customer can pick up the order.

Figure 19 depicts steps for method for loading crates into the automated modular storage device with alternative lift solution which is shown and described in figure 8a-c. The method is similar to what is described in figure 17, however once the crate is moved to the conveyor module under the lift where a transfer section of the conveyor line lifts the crate up and the lift moves down until a conveyor cell of the lift is on same level as the transfer section after which the crate is moved to the conveyor cell of the lift.

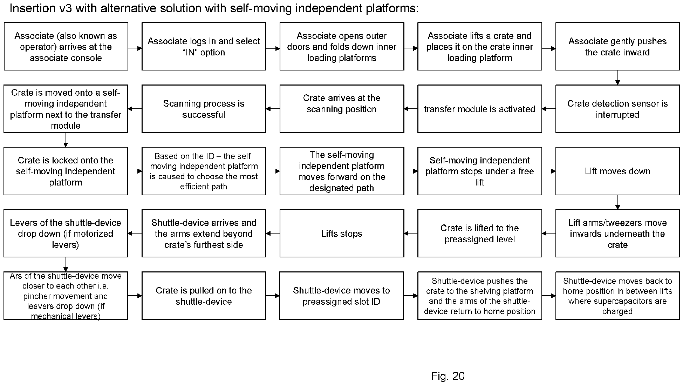

Figure 20 depicts steps for a method for loading crates into the automated storage device in an alternative solution where in the automated modular storage device comprises self-moving independent platforms to move the crates instead of conveyor lines.

Figure 21 depicts steps for a customer to pick an order in an alternative solution where in the automated modular storage device comprises self-moving independent platforms to move the crates instead of conveyor lines. The steps are similar as in figure 18, except that the crates are transferred in the conveyor module with the self-moving independent platforms instead of a conveyor belt.

Figure 22 depicts steps for customer to collect an order from the automated modular storage device in an alternative solution with drawers. Here, the steps are the same as in figure 18 up to the point where the crate is moving from the conveyor module toward the customer console. In this alternative version once the crate arrives behind the customer console, the crate is moved into a drawer. Up to four crates can be loaded into one large drawer. The drawer is openable by the customer at the customer console based on the information of the pickup code saved into the computerized system. The drawer may also be openable by a motorized system; and the drawer may be openable only to half-way in case the customer has only one or two crates filled with his/her order. Upon having the drawer opened the customer picks the order, the drawer retracts and empty crates are lifted from the drawer with crane mechanism and moved to a crate stacking device stacking empty crates for storage.

### Element listing:

100 - crate
200, 200a, 200b - lower storage module
201 - storage level
202 - aisle
203 - platform
204 - horizontal rail
205 - shelving row
206 - walkway
220 - sandwich panel in between temperature zones
221 - movable door
250 - upper storage module
251 - integrated climate control module
300 - conveyor module
301 - conveyor line
302 - conveyor cell
303 - conveyor sensor
320 - conveyor module under lift
350 - shuttle-device
352 - drivewheel of a shuttle-device
353 - stabilizer wheel of a shuttle-device
360 - telescopic arms of a shuttle-device
361 - rotating levers
400 - lift module
401 - lift
402 - crate carrying arms
403 - carriage
451 - lift of an alternative lift solution
452 - moving conveyor section
453 - lift conveyor cell
500 - console module
501 - associate console
502 - insulated outer doors
503 - inner loading platforms
504 - touchscreen
505 - handheld scanner
506 - maintenance door
507 - small ladder
508 - electrical cabinet
509 - compressed air system
510 - inner safety door
511 - rail system of the inner safety door
512 - ladder
525 - customer console
526- outer doors
527 - frame around the door
528 - wear-resistant surface
529 - light
530 - touchscreen
531 - scanner
540 - side console
541 - trolley
550 - drawer
551 - crane-like mechanism
552 - outer conveyor line
553 - crate stacking device
560 - self-moving independent platform
561 - remote console
562 - auxiliary console

## Claims

1. An automated modular device for storing, and managing grocery orders loaded in crates (100) having an adjustable capacity, the capacity of the device being determined by a number and type of modules in the device, wherein the device comprises:
a multitude of storage modules (200, 200a, 200b, 250), configured to be seamlessly attached to each other in horizontal and/or vertical direction;
a multitude of conveyor modules (300, 320), configured to be seamlessly attached to one another in horizontal direction, and assembled underneath the multitude of storage modules (200, 200a, 200b, 250);
at least one lift module (400) seamlessly attached to at least one storage module (200, 200a, 200b, 250), and comprising at least one lift (401, 451) vertically connecting a conveyor module (300, 320) and at least one storage module (200, 200a, 200b, 250);
at least one customer console (525) for retrieval of grocery orders;
at least one associate console (501) for inserting crates (100) loaded with grocery orders, and
at least one shuttle-device (350); wherein
each storage module (200, 200a, 200b, 250) comprises two shelving rows (205) with multitude of storage levels (201) each configured to store a multitude of crates (100), and an aisle (202) in between the two shelving rows (205),
each storage level (201) comprising a horizontal rail (204) facing to the aisle (202) and being positioned at a same level as the horizontal rail (204) on the shelving row (205) on opposite side of the aisle (202) to form a pair of shuttle rails to support the shuttle-device (350) and extending through the horizontally attached storage modules (200, 200a, 200b, 250) and the at least one lift module (400);
each conveyor module (300, 320) comprises at least one conveyor line (301) comprising a multitude of conveyor cells (302) or a multitude of self-moving independent platforms (560), each conveyor cell (302) or independent platform (560) configured to hold a single parcel crate (100) at a time and having at least one sensor to recognize positioning of the single parcel crate (100);
the at least one lift module (400) comprises at least one lift (401, 451) configured to move crates (100) in vertical direction between a conveyor cell (302) or self-moving independent platform (560) in a conveyor module (320) located directly underneath the lift module (400) and the at least one storage module which the lift module (400) is attached to (lower storage module/upper storage module (200/250));
the at least one shuttle-device (350) is configured to move horizontally on one storage level (201) along the aisle (202) and being supported by the rails (204) of two opposite shelving rows (205), and having telescopic arms (360) configured to extend to two opposite directions, and when the shuttle-device (350) is in a storage module (200, 200a, 200b, 250) the telescopic arms (360) are configured to reach toward each shelving row (205) on opposite sides of the aisle (202) to pick or deposit a crate (100), and when the shuttle device (350) is in a lift module (400) the telescopic arms (360) are configured to reach to the at least one lift (401, 451) to pick or deposit a crate (100);
the at least one customer console (525) and the at least one associate console (501) preferably located at opposite ends of the modular device, wherein the associate console (501) has at least one opening providing access to a loading platform (503) extending from at least one conveyor module (300) and having connection with at least one conveyor cell (302) configured to move crates (100) to at least one conveyor line (301) or to the at least one self-moving platform (560) in the conveyor module (300), thus enabling continuous insertion of crates (100) into the device,
and at least one controller configured to control the at least one lift (401, 451), the at least one conveyor line (301) or the self-moving independent platforms (560), and the at least one shuttle-device (350).

2. The automated modular device of claim 1, wherein the device has two stories of storage modules (200, 200a, 200b, 250).

3. The automated modular device of claim 1 or 2, wherein the at least one lift (401) has a pair of crate carrying arms (402) mounted to a carriage (403), and the crate carrying arms (402) are configured to move closer to each other to carry a crate (100) when the crate (100) is positioned on the conveyor line (301) or on a self-moving independent platform (560) directly under the lift (401).

4. The automated modular device of claim 1 or 2, wherein the at least one lift (451) has a lift conveyor cell (453) and the conveyor line (301) underneath the lift (451) has a moving conveyor section (452) configured to raise a crate (100) positioned on the moving conveyor section (452) up to a level of the lift conveyor cell (453) and to move the crate (100) horizontally to the lift conveyor cell (453).

5. The automated modular device of any of the preceding claims comprising a multitude of storage modules (200, 200a, 200b, 250), one or more conveyor modules (300, 320), one or more lift modules (400), and one or more loading platforms (503), wherein a flow of loaded crates (100) from the one or more loading platforms (503) through the at least one conveyor module (300, 320) to the at least one lift module (400), and further to one of the multitude of storage modules (200, 200a, 200b, 250) is optimized by one or more computers, such that loading of the crates (100) can be a continuous process, wherein the optimization comprises adjusting a number of storage modules (200, 200a, 200b, 250) attached to each other horizontally and/or vertically, adjusting the number of conveyor lines (301) or independently moving platforms (560) in the conveyor modules (300, 320), and adjusting the number of lift modules (400) and the number of lifts (401, 451) in the lift modules (400).

6. The automated modular device of any of the preceding claims, wherein the modular device has at least two storage modules (200, 200a, 200b, 250) attached to each other in horizontal direction and having different temperatures and being separated from each other by a panel comprising a multitude of access openings through which the horizontal rail (204) extends,
each access opening located such that the shuttle-device (350) fits through the access opening when moving along the rail (204) between the two horizontally attached storage modules (200, 200a, 200b, 250); and
wherein each access opening is openable and closable by a door plate (221) comprising a pair of drive wheels enabling the door plate (221) to move along the pair of shuttle rails when pushed or pulled by the at least one shuttle-device (350), and
wherein the access opening is opened when the shuttle-device (350) moves from a first of the horizontally attached modules to a second of the horizontally attached storage modules pushing the door plate (221) off the access opening, and closed when the at least one shuttle-device (350) upon returning from the second horizontally attached storage module to the first horizontally attached storage module pulls the door plate (221) back to the access opening.

7. The automated modular device of any of the preceding claims, wherein the automated modular device is configured to move the crates (100) by the one or more lifts (401, 451) located in the one or more lift modules (400), wherein each lift (401, 451) has means (402, 453) to hold one crate (100), and
each lift (401, 451) is configured to be controlled by the at least one controller and upon positioning a crate (100) on a conveyor cell (302) or on a self-moving independent platform (560) underneath the lift (401, 451), the controller is configured to cause the lift (401, 451) to move downward to a position where the crate (100) can be moved onto the means (402, 453) to hold one crate (100), and
the controller is further configured to cause the lift (401, 451) to move upward to a predetermined storage level (201) where an empty shuttle-device (350) is located within the lift-module (400) and in which storage level (201) there is a free storage location, and the shuttle-device (350) is caused to reach the crate (100) with extendable arms (360) and load the crate (100) onto the shuttle-device (350) which is programmed to move along the rails to the free storage location and transfer the crate (100) to the storage location by the extendable arms (360).

8. The automated modular device of claim 7, wherein the means to hold one crate (100) comprises a pair of carrying arms (402) connected to a vertically moving carriage and wherein the carrying arms (402) are capable of moving horizontally in relation to each other, and
upon positioning a crate (100) on a conveyor cell (302) or on a self-moving independent platform (560) underneath the lift (401), the controller is configured to cause the lift (401) to move downward to a height where the pair of carrying arms (402) are above the crate (100) and the controller is configured to cause the carrying arms (402) to move further away from each other such that a distance between the carrying arms (402) is larger than the width of the crate (100); and
the controller is further configured to cause the lift (401) to move further down to a height where the carrying arms (402) are at a level below the crate (100), and the carrying arms (402) to move closer to each other, and the controller is configured to cause the lift (401) to move upward such that the crate (100) becomes resting on the pair of the carrying arms (402).

9. The automated modular device of claim 7, wherein the means to hold one crate (100) is a lift conveyor cell (453), and wherein upon positioning a crate (100) on a conveyor cell (302) or on a self-moving independent platform (560) underneath the lift (451), the controller is configured to cause the conveyor cell (302) which forms a moving conveyor section (452) to move upward and the lift (451) to move downward such that the lift conveyor cell (453) is at same level with the moving conveyor section (452) and the moving conveyor section (452) is caused to move the crate (100) horizontally to the lift conveyor cell (453) and upon a sensor recognizing the crate (100) on the lift conveyor cell (453) the controller is configured to cause the lift (451) to move upward to the predetermined storage level (201).

10. A computerized method to operate an automated modular device comprising a multitude of storage modules (200, 250), a multitude of lift modules (400), a multitude of conveyor modules (300, 320), a multitude of shuttle-devices (350), at least one loading platform (503) to load crates (100) with orders into the device, and at least one customer console (525) to retrieve orders; wherein
the loading platform (503) is configured to allow insertion of a crate (100) to a conveyor line (301) or on a self-moving independent platform (560);
the conveyor line (301) or the self-moving independent platform (560) is caused to transfer the crate (100) to a closest lift module (400) having a free lift (401, 451), and to position the crate (100) underneath of the free lift (401, 451);
the free lift (401, 451) is caused to receive the crate (100) and the conveyor line (301) or the self-moving independent platform (560) is thus being freed for a next crate (100);
the lift (401, 451) is caused to move the crate (100) to a closest storage level (201) having a free shuttle-device (350) located in the lift module (400), and the shuttle-device (350) is caused to pull the crate (100) from the lift (401, 451) and thus freeing the lift (401, 451) for receiving a next crate (100);
the shuttle-device (350) with the crate (100) is caused to move along the pair of shuttle rails to a closest free storage position in the storage level (201) and to push the crate (100) to the free storage position thus freeing the shuttle-device (350) for a next crate (100);
wherein simultaneously a free shuttle-device (350) is caused to receive a crate (100) having a requested order from a storage module (200, 250) thus freeing a storage position for another crate (100), the shuttle-device (350) with the crate (100) is caused to move into a closest lift module (400) having a free lift (401, 451) and to transfer the crate (100) to the free lift (401, 451) thus freeing the shuttle-device (350) for another crate (100), the lift (401, 451) is caused to move the crate (100) to a conveyor module (320) underneath the lift (401, 451) and thus freeing the lift (401, 451) for another crate (100), and the crate (100) is caused to be transferred by a conveyor line (301) or an independently moving platform (560) in the conveyor module (300, 320) to the customer console (525) for a customer to pick the order from the crate (100) and the empty crate (100) is caused to be moved by the conveyor line (301) or the independently moving platform (560) to a crate storage;
wherein a flow of the crates (100) from the conveyor lines (301) or the self-moving independent platforms (560) to the lifts (401, 451) and the storage modules (200, 250) is controlled by one or more controllers such that the flow is a continuous process without bottle necks and insertion of the crates (100) to the loading platform (503) can be continuous without waiting time and simultaneously retrieve orders from the customer console (525) is possible.
